# FASCICULE DE BREVET EUROPEEN

(11) **EP 3 067 610 B1**
(45) Date de publication et mention de la délivrance du brevet: **23.05.2018**
(21) Numéro de dépôt: 16159179.7
(22) Date de dépôt: 08.03.2016
(51) Int. Cl.: F16L 17/025, F16L 19/025, F17C 13/00, F17C 13/04

(54) **PROCÉDÉ ET OUTIL DE REMPLISSAGE**
AUFFÜLLVERFAHREN UND AUFFÜLLWERKZEUG
FILLING METHOD AND FILLING TOOL

(30) Priorité: 12.03.2015 FR 1552053
(43) Date de publication de la demande: 14.09.2016
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FELIX, Emmanuel, 95280 JOUY LE MOUTIER (FR); PAOLI, Hervé Roger, 92500 RUEIL-MALMAISON (FR); REAUX, Christophe, 94460 VALENTON (FR)
(74) Mandataire: De Cuenca, Emmanuel Jaime

(56) Documents cités:
- WO-A1-2013/099757
- GB-A- 2 172 072

## Description

La présente invention concerne un procédé et un outil de remplissage d'un dispositif de stockage comprenant un robinet muni d'un raccord de transfert de fluide.

L'invention concerne plus particulièrement un raccord de transfert de fluide sous pression et notamment raccord de remplissage pour dispositif de stockage de fluide sous pression, le raccord comprenant un corps abritant un circuit interne pour du fluide sous pression, une première extrémité du circuit débouchant sur le corps au niveau d'une extrémité de raccordement du corps, l'extrémité de raccordement comprenant une cavité, la première extrémité du circuit débouchant au fond de ladite cavité.

Le document GB2172072 A décrit un tel raccord.

De nombreuses bouteilles ou ensembles de bouteilles de fluide sous pression destinées à contenir un gaz sous pression sont équipées d'un robinet avec ou sans détendeur de pression. Ces robinets comportent un raccord d'entrée (raccord de remplissage) qui permet le remplissage du ou des récipients avec lesquels le robinet est relié. Ce remplissage est réalisé à l'aide d'un outil de remplissage (c'est-à-dire une prise de conditionnement) relié à une source de fluide sous pression.

Il est souhaitable de rendre impossible ou difficile le remplissage non autorisé de bouteilles de gaz comprimé. En effet, ces manipulations effectuées par des personnes inexpérimentées ou non autorisées peuvent être dangereuses et peuvent notamment entraîner la pollution des bouteilles.

Il y a donc un intérêt à disposer de bouteilles destinées a contenir un gaz sous pression et équipées de robinets qui ne puissent être remplies que par l'opérateur autorisé. Un problème posé est ainsi d'empêcher le remplissage d'une bouteille ou d'un récipient de gaz par une personne non autorisée à le faire mais sans pour autant conduire à une complication de l'opération de remplissage de la bouteille, ce qui affecterait la productivité des centres de conditionnement. Un autre problème est de proposer une solution qui permet de sécuriser l'opération de remplissage en assurant une bonne étanchéité et sécurité lors de la connexion de l'outil de remplissage sur raccord de remplissage.

Le document FR2807140A1 décrit une telle solution connue.

Un but de l'invention est de proposer une solution qui améliore encore la solution de tout ou partie des problèmes ci-dessus.

Un but de la présente invention est de pallier tout ou partie des inconvénients de l'art antérieur relevés ci-dessus.

L'invention concerne un procédé de remplissage conforme à la revendication 1 d'un dispositif de stockage via un outil de remplissage venant se raccorder de façon étanche à l'extrémité de raccordement, le procédé comportant une étape de réalisation d'une étanchéité entre l'outil de remplissage et l'extrémité de raccordement dans et/ou à l'entrée de la cavité puis une étape de transfert de fluide dans le dispositif de stockage par l'outil de remplissage via l'extrémité de raccordement et le circuit.

Par ailleurs, des modes de réalisation de l'invention peuvent comporter l'une ou plusieurs des caractéristiques suivantes :
- la première extrémité du circuit forme un orifice circulaire sur l'extrémité de raccordement, l'arête ayant une forme circulaire,
- l'extrémité de raccordement comprend sur sa périphérie un filetage formé concentriquement autour de la cavité et de la première extrémité du circuit,

La cavité comprend une portion tronconique convergeant vers la première extrémité du circuit, la jonction entre l'arête et l'extrémité convergente de la portion tronconique formant une gorge entourant la première extrémité du circuit, l'extrémité divergente de la portion tronconique de la cavité étant raccordée à une portion cylindrique délimitant la bordure de l'entrée de la cavité, lors de l'étape de réalisation d'une étanchéité entre l'outil de remplissage et l'extrémité de raccordement, l'outil de remplissage comporte une zone venant en contact étanche avec l'un au moins parmi : la portion tronconique, la nervure, la portion cylindrique, l'entrée de la cavité,

L'extrémité de l'outil de remplissage venant se loger au moins partiellement dans la cavité lors de l'étape de réalisation d'une étanchéité entre l'outil de remplissage et l'extrémité de raccordement comprend une première zone tronconique conjuguée de la portion tronconique de la cavité, ladite première zone tronconique de l'outil de remplissage étant raccordée à une second zone complémentaire de l'arête, lors de l'étape de réalisation d'une étanchéité entre l'outil de remplissage et l'extrémité de raccordement, ladite première zone tronconique de l'outil de remplissage vient en appui sur la portion tronconique de la cavité et la second zone de l'outil de remplissage vient en appui sur l'arête. Selon d'autres particularités possibles :
- l'outil de remplissage comprend une extrémité venant se loger au moins partiellement dans la cavité lors de l'étape de réalisation d'une étanchéité entre l'outil de remplissage et l'extrémité de raccordement,
- ladite première zone tronconique de l'outil de remplissage comprend un joint d'étanchéité venant en appui sur la portion tronconique de la cavité,
- lors de l'étape de réalisation d'une étanchéité entre l'outil de remplissage et l'extrémité de raccordement, la première pièce de l'outil de remplissage est logée et emboîtée dans une concavité de la seconde pièce.

L'invention concerne également un outil de remplissage d'un tel robinet dans lequel l'outil comprend un corps abritant un canal interne de transfert de fluide, l'outil comprenant une extrémité destinée à être raccordé de façon étanche à un raccord de remplissage d'un robinet, ladite extrémité de l'outil de remplissage comprenant une première zone tronconique convergente vers son extrémité terminale, ladite extrémité convergente de la première zone tronconique de l'outil de remplissage délimitant une ouverture d'entrée du canal interne, l'ouverture d'entrée du canal comprenant un chanfrein formant une second zone tronconique divergente en direction de l'extrémité terminale de l'outil de remplissage, ladite première zone tronconique de l'outil de remplissage étant raccordée à la second zone en formant un angle compris entre 70 et 130 degrés et de préférence entre 80 et 100 degrés.

Selon d'autres particularités possibles :
- l'outil de remplissage comprend une première pièce formant l'extrémité de l'outil de remplissage venant se loger au moins partiellement dans la cavité lors de l'étape de réalisation d'une étanchéité entre l'outil de remplissage et l'extrémité de raccordement et une seconde pièce comprenant un organe d'accrochage mécanique amovible sur l'extrémité de raccordement, notamment un taraudage,
- les première et seconde pièces de l'outil de remplissage sont des entités physiques liées ou distinctes, lors de l'étape de réalisation d'une étanchéité entre l'outil de remplissage et l'extrémité de raccordement, la seconde pièce est accrochée mécaniquement sur l'extrémité de raccordement et enserre la première pièce sur cette extrémité de raccordement,
- la première pièce comporte une butée serrée entre l'extrémité de raccordement et une paroi de la seconde pièce,
- la première pièce a la forme générale d'un raccord tubulaire,
- la seconde pièce a la forme générale d'un écrou comprenant un taraudage destiné à coopérer avec un filetage formé sur l'extrémité de raccordement,
- ladite première zone tronconique de l'outil de remplissage comprend une gorge annulaire dans laquelle est logé un joint d'étanchéité torique.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe verticale, schématique et partielle, illustrant un exemple de robinet et de son outil de remplissage,
- la figure 2 représente une vue en coupe et dans un état démonté d'un détail de la figure 1 illustrant le raccord de remplissage du robinet et l'extrémité d'un outil de remplissage destiné à s'y raccordé,
- la figure 3 représente une vue similaire à celle de la figure 2 dans un état monté (raccordé),
- la figure 4 représente une vue en perspective, schématique et partielle, d'un détail du robinet illustrant le raccord de remplissage,
- la figures 5 représente une vue en coupe, partiellement démontée et avec une zone agrandie, d'un détail de la figure 1 illustrant un premier exemple de réalisation de l'étanchéité entre le raccord de remplissage du robinet et l'extrémité d'un outil de remplissage,
- les figures 6 et 7 représentent des vues similaires à celle de la figure 5 illustrant respectivement deux autres exemples de réalisation d'étanchéité entre le raccord de remplissage du robinet et l'extrémité d'un outil de remplissage.

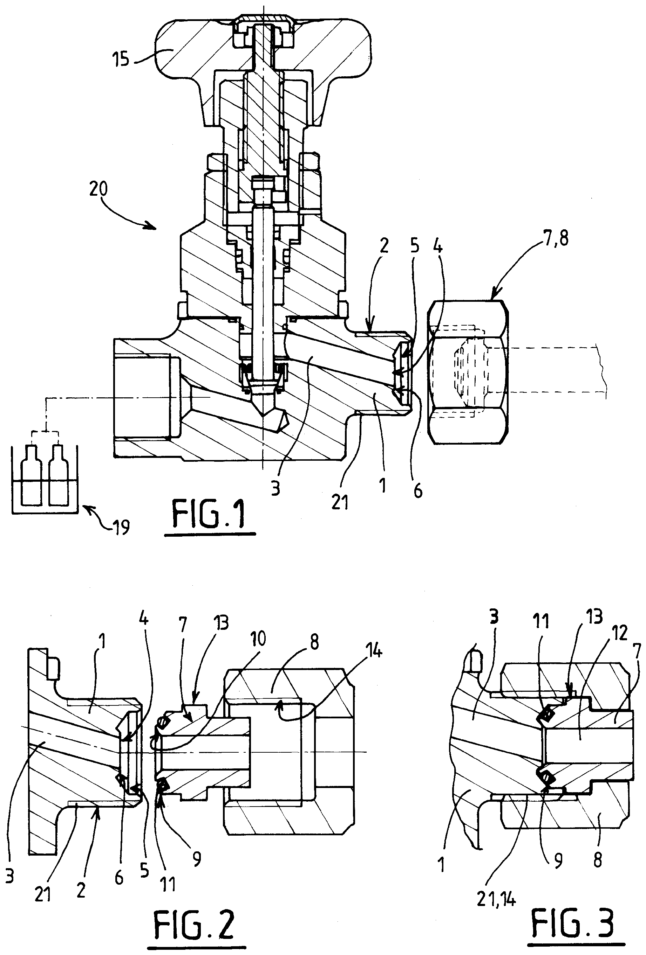

La figure 1 représente un exemple de robinet 20 de fluide (notamment gaz) sous pression pouvant mettre en oeuvre d'invention. Le robinet 20 peut être un robinet monté sur une bouteille de gaz sous pression et/ou un robinet d'un cadre 19 de bouteilles sous pression (robinet commun à plusieurs bouteilles et relié à ces dernières via un circuit fluidique commun).

Le robinet 20 comprend classiquement un circuit 3 de remplissage destiné à être relié avec le volume de stockage de la ou des bouteilles concernées. Le circuit 3 de remplissage est classiquement muni d'un clapet d'isolement. Le clapet d'isolement peut être un clapet anti-retour à ouverture automatique lors de la connexion d'un outil de remplissage et/ou un clapet commandé par un organe d'actionnement manuelle tel qu'un volant 15 rotatif ou levier par exemple.

Le corps 1 du robinet comporte une extrémité de raccordement 2 au niveau de laquelle débouche une extrémité du circuit 3 de remplissage (son orifice d'entrée).

Cette extrémité 2 de raccordement forme ainsi un raccord de remplissage (et éventuellement un raccord de soutirage de gaz avec un écoulement du gaz en sens inverse dans ce cas).

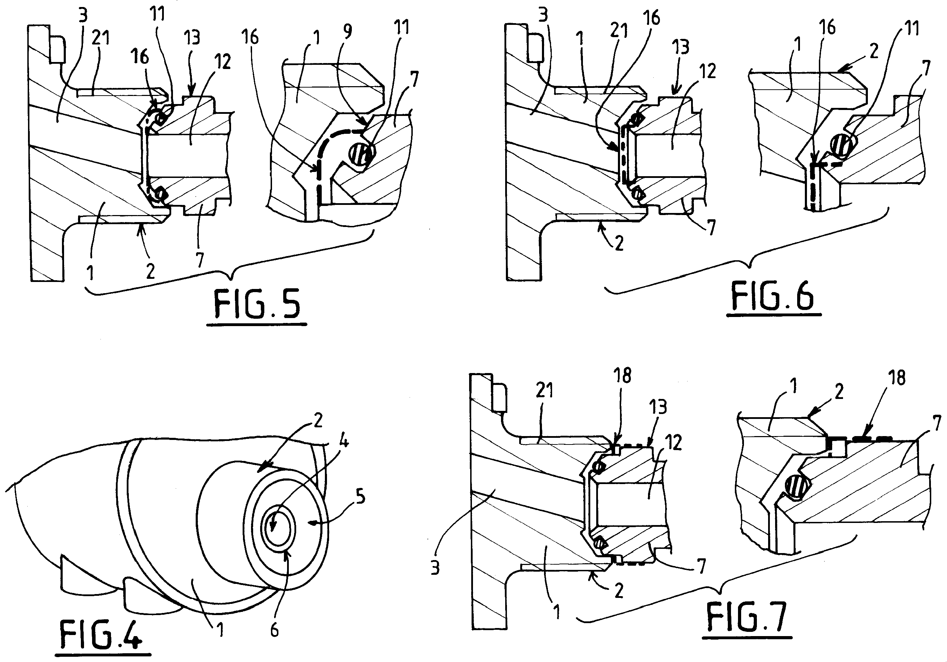

Comme visible aux figures 1 à 3, une première extrémité 4 du circuit 3 débouche sur le corps 1 au niveau d'une cavité 5 formée au niveau de l'extrémité de raccordement 2. La première extrémité 4 du circuit 3 débouche au fond de la cavité 5. De plus, la bordure délimitant la première extrémité 4 du circuit 3 comporte une arête 6 périphérique (formant par exemple une nervure, rebord ou couronne) faisant saillie par rapport au fond de la cavité 5 (cf. figure 4).

De préférence, l'arête 6 délimite la première extrémité 4 du circuit 3, c'est-à-dire l'arête délimite l'orifice d'entrée du circuit 3 qui débouche sur le corps 1. C'est-à-dire que l'arête 6 définit le contour (la périphérie) de l'entrée du circuit 3.

De préférence, la première extrémité 4 du circuit forme un orifice circulaire sur l'extrémité de raccordement 2 et l'arête 6 a une forme circulaire.

Comme illustré, la cavité 5 comprend de préférence une portion tronconique convergeant vers la première extrémité 4 du circuit 3. L'arête 6 est située au niveau de l'extrémité convergente de la portion tronconique. Ainsi, l'arête 6 fait saille dans le fond de la cavité 5 par rapport à l'extrémité convergente de la portion tronconique.

De préférence, la base de l'arête 6 coïncide avec l'extrémité convergente de la portion tronconique. C'est-à-dire que l'arête 6 est située directement à l'extrémité de la portion tronconique, sans zone de transition intermédiaire plane ou autre.

De préférence également, comme illicite aux figures, l'arête 6 est unique et constitue la seule saillie au fond de la cavité 5.

La jonction entre l'arête 6 et l'extrémité convergente de la portion tronconique forme de préférence une gorge circulaire entourant la première extrémité 4 du circuit 3.

De plus, l'extrémité divergente de la portion tronconique peut être raccordée à une portion cylindrique délimitant la bordure de l'entrée de la cavité 5.

L'extrémité de raccordement 2 comprend en outre un système d'accrochage mécanique avec l'outil de raccordement. Ce système d'accrochage est dans cet exemple un filetage 21 formé sur une surface cylindrique de l'extrémité de raccordement 2. Le filetage 21 est situé concentriquement autour de la cavité 5 et de la première extrémité 4 du circuit 3.

Cette géométrie de raccord empêche ou limite le risque qu'un outil de remplissage non autorisé vienne se raccorder pour transférer du fluide. Cette géométrie de raccord implique en particulier une étanchéité particulière entre le raccord et l'outil de remplissage correspondant.

En effet, l'outil de remplissage 7, 8 (et/ou éventuellement de soutirage) autorisé comprend une extrémité (raccord) venant se loger au moins partiellement dans la cavité 5 lors de l'étape de réalisation d'une étanchéité entre l'outil de remplissage 7, 8 et l'extrémité de raccordement 2.

Plus précisément, et comme illustré aux figures 1 à 3, l'outil 7, 8 comprend un corps abritant un canal 12 interne de transfert de fluide.

L'outil de remplissage 7, 8 comprend une extrémité munie une première zone 9 tronconique convergente vers son extrémité terminale. Cette extrémité convergente est conjuguée de la portion tronconique de la cavité 5 (c'est-dire complémentaire pour s'y emboîter). La première zone 9 tronconique de l'outil 7, 8 de remplissage est raccordée à une second zone 10 complémentaire de la nervure 6. Cette seconde zone 10 est tronconique et divergente en direction de l'extrémité terminale de l'outil. Ces deux zones 9, 10 tronconiques sont directement raccordées l'une à l'autre. C'est-à-dire que l'extrémité convergente de la première zone 9 coïncide avec l'extrémité divergente de la seconde zone 10.

L'extrémité divergente de la première zone 9 peut être raccordée à une zone tronconique destinée à coopérer avec une portion cylindrique conjuguée du raccord. L'extrémité de l'outil peut donc être constituée de ces deux zones 9, 10 tronconiques formées au bout d'une portion cylindrique. Ainsi, lors de l'étape de réalisation d'une étanchéité entre l'outil 7, 8 de remplissage et l'extrémité de raccordement 2, la première zone 9 tronconique de l'outil 7, 8 de remplissage vient en appui sur la portion tronconique de la cavité 5 et la second zone 10 de l'outil 7, 8 de remplissage vient en appui sur l'arête 6 (cf. figure 3).

Dans cet exemple, la première zone 9 tronconique de l'outil de remplissage comprend un joint 11 d'étanchéité venant en appui sur la portion tronconique de la cavité 5. Par exemple, le joint 11 est torique et logé dans une gorge annulaire formée sur la première zone tronconique 9.

L'extrémité de la première zone 9 tronconique de l'outil 7, 8 de remplissage délimite l'ouverture d'entrée du canal 12 interne. L'ouverture d'entrée du canal 12 comprend un chanfrein formant la seconde zone 10 tronconique. Cette seconde zone tronconique 10 est divergente en direction de l'extrémité terminale de l'outil de remplissage 7, 8 (le chanfrein forme une restriction de diamètre vers l'intérieur du canal 12 de l'outil). La première zone 9 est raccordée à la seconde zone 10 en formant un angle compris par exemple entre 70 et 130 degrés et de préférence entre 80 et 100 degrés.

Cette géométrie forme ainsi un emboîtement et une étanchéité garantissant une sécurité de la jonction entre le raccord et l'outil de remplissage.

L'extrémité de l'outil de remplissage peut comprendre une première pièce 7 formant l'extrémité de l'outil de remplissage venant se loger au moins partiellement dans la cavité 5 et une seconde pièce 8 comprenant un organe 14 d'accrochage mécanique amovible sur l'extrémité de raccordement, notamment un taraudage 14 complémentaire du filetage de l'extrémité de raccordement 2.

Les première 7 et seconde 8 pièces de l'outil de remplissage sont par exemple des entités physiques distinctes (cf. figure 2). Lors de l'étape de réalisation d'une étanchéité entre l'outil de remplissage 7, 8 et l'extrémité de raccordement 2, la seconde pièce 8 est par exemple accrochée mécaniquement sur l'extrémité 2 de raccordement et enserre la première pièce 7 sur cette extrémité de raccordement 2 (cf. figure 3).

Par exemple, lors de l'étape de réalisation d'une étanchéité entre l'outil de remplissage 7, 8 et l'extrémité de raccordement 2, la première 7 pièce de l'outil de remplissage est logée et emboîtée dans une concavité conjuguée de la seconde pièce 8.

La première pièce 7 comporte par exemple un épaulement interne formant une butée 13 qui est serrée entre l'extrémité de raccordement 2 et une paroi de fond de la seconde pièce 8.

La première pièce 7 a par exemple la forme générale d'un raccord tubulaire tandis que la seconde pièce 8 peut avoir la forme générale d'un écrou cylindrique comprenant un taraudage 14 destiné à coopérer avec un filetage formé sur l'extrémité de raccordement 2.

Cette structure assure une parfaite étanchéité et cohésion mécanique et empêche ou limite le risque qu'un outil non autorisé ne vienne se raccorder au robinet.

Bien entendu, l'invention n'est pas limitée à l'exemple décrit ci-dessus. En particulier, l'étanchéité entre l'extrémité de l'outil de remplissage et le raccord peut être réalisée différemment.

Ainsi, et comme schématisé à la figure 5, l'extrémité terminale de la première pièce 7 de l'outil peut comporter une face 16 venant former une étanchéité par contact (sans joint) avec la portion tronconique de la cavité 5 du raccord (symbolisée sur la figure 5 par une courbe discontinue).

Comme schématisé à la figure 6, dans le cas où la géométrie de l'arête 6 le permet, l'extrémité terminale de la première pièce 7 de l'outil peut comporter une face 17 venant former une étanchéité par contact (par exemple sans joint) avec l'arête 6 (symbolisée sur la figure 6 par une courbe discontinue).

Comme schématisé à la figure 7, la première pièce 7 de l'outil peut comporter une zone 18 périphérique venant former une étanchéité par contact (avec ou sans joint) avec l'entrée circulaire/cylindrique de la cavité 5 (symbolisée sur la figure 7 par une courbe discontinue).

Bien entendu, tous ou certains de ces modes de réalisation de l'étanchéité peuvent être combinés.

## Revendications

1. Procédé de remplissage d'un dispositif de stockage, de fluide sous pression comprenant une bouteille ou un ensemble de bouteilles comprenant au moins un robinet, le robinet comprenant un raccord de remplissage comprenant un corps (1) abritant un circuit (3) interne pour du fluide sous pression, une première extrémité (4) du circuit (3) débouchant sur le corps (1) au niveau d'une extrémité de raccordement (2) du corps (1), l'extrémité de raccordement (2) comprenant une cavité (5), la première extrémité (4) du circuit (3) débouchant au fond de ladite cavité (5), la bordure délimitant la première extrémité (4) du circuit (3) comportant une arête (6) périphérique faisant saillie par rapport au fond de la cavité (5), l'arête (6) étant située au fond de la cavité et délimitant la première extrémité (4) du circuit (3), c'est-à-dire délimite l'orifice d'entrée du circuit (3) qui débouche sur le corps (1), la cavité (5) comprenant une portion tronconique convergeant vers la première extrémité (4) du circuit (3), l'arête (6) étant située au niveau de l'extrémité convergente de la portion tronconique, l'arête (6) faisant saille dans le fond de la cavité (5) par rapport à l'extrémité convergente de la portion tronconique, le remplissage étant réalisé via un outil de remplissage (7, 8) venant se raccorder de façon étanche à l'extrémité de raccordement (2), le procédé comportant une étape de réalisation d'une étanchéité entre l'outil de remplissage (7, 8) et l'extrémité de raccordement (2) dans et/ou à l'entrée de la cavité (5) puis une étape de transfert de fluide dans le dispositif de stockage par l'outil de remplissage (7, 8) via l'extrémité de raccordement (2) et le circuit (3), la jonction entre l'arête (6) et l'extrémité convergente de la portion tronconique formant une gorge entourant la première extrémité (4) du circuit (3), l'extrémité divergente de la portion tronconique de la cavité étant raccordée à une portion cylindrique délimitant la bordure de l'entrée de la cavité (5), lors de l'étape de réalisation d'une étanchéité entre l'outil de remplissage (7, 8) et l'extrémité de raccordement (2), l'outil de remplissage comportant une zone venant en contact étanche avec l'un au moins parmi : la portion tronconique, l'arête (6), la portion cylindrique, l'entrée de la cavité (5), **caractérisé en ce que** l'extrémité de l'outil de remplissage (7, 8) venant se loger au moins partiellement dans la cavité (5) lors de l'étape de réalisation d'une étanchéité entre l'outil de remplissage (7, 8) et l'extrémité de raccordement (2) comprend une première zone (9) tronconique conjuguée de la portion tronconique de la cavité (5), ladite première zone (9) tronconique de l'outil (7, 8) de remplissage étant raccordée à une second zone (10) complémentaire de l'arête (6), et **en ce que** lors de l'étape de réalisation d'une étanchéité entre l'outil de remplissage (7, 8) et l'extrémité de raccordement (2), ladite première zone (9) tronconique de l'outil (7, 8) de remplissage vient en appui sur la portion tronconique de la cavité (5) et la second zone (10) de l'outil (7, 8) de remplissage vient en appui sur l'arête (6).

2. Procédé de remplissage selon la revendication 1, **caractérisé en ce que** l'outil (7, 8) de remplissage comprend une extrémité venant se loger au moins partiellement dans la cavité (5) lors de l'étape de réalisation d'une étanchéité entre l'outil de remplissage (7, 8) et l'extrémité de raccordement (2).

3. Procédé de remplissage selon la revendication 1 ou 2, **caractérisé en ce que** ladite première zone (9) tronconique de l'outil (7, 8) de remplissage comprend un joint (11) d'étanchéité venant en appui sur la portion tronconique de la cavité (5).

4. Procédé selon l'une quelconque des revendications 1 à 3 **caractérisé en ce que** la première extrémité (4) du circuit forme un orifice circulaire sur l'extrémité de raccordement (2) et **en ce que** l'arête (6) a une forme circulaire.

5. Procédé selon l'une quelconque des revendications 1 à 4 **caractérisé en ce que** l'extrémité de raccordement (2) comprend sur sa périphérie un filetage formé concentriquement autour de la cavité (5) et de la première extrémité (4) du circuit (3).

6. Outil de remplissage d'un robinet comprenant un raccord de remplissage comprenant un corps (1) abritant un circuit (3) interne pour du fluide sous pression, une première extrémité (4) du circuit (3) débouchant sur le corps (1) au niveau d'une extrémité de raccordement (2) du corps (1), l'extrémité de raccordement (2) comprenant une cavité (5), la première extrémité (4) du circuit (3) débouchant au fond de ladite cavité (5), la bordure délimitant la première extrémité (4) du circuit (3) comportant une arête (6) périphérique faisant saillie par rapport au fond de la cavité (5), l'arête (6) étant située au fond de la cavité et délimitant la première extrémité (4) du circuit (3), c'est-à-dire délimite l'orifice d'entrée du circuit (3) qui débouche sur le corps (1), la cavité (5) comprenant une portion tronconique convergeant vers la première extrémité (4) du circuit (3), l'arête (6) étant située au niveau de l'extrémité convergente de la portion tronconique, l'arête (6) faisant saille dans le fond de la cavité (5) par rapport à l'extrémité convergente de la portion tronconique, **caractérisé en ce que** l'outil (7, 8) comprend un corps abritant un canal (12) interne de transfert de fluide, l'outil comprenant une extrémité destinée à être raccordé de façon étanche au dit raccord de remplissage d'un robinet, ladite extrémité de l'outil de remplissage comprenant une première zone (9) tronconique convergente vers son extrémité terminale, ladite extrémité convergente de la première zone (9) tronconique de l'outil (7, 8) de remplissage délimitant une ouverture d'entrée du canal (12) interne, l'ouverture d'entrée du canal (12) comprenant un chanfrein formant une second zone (10) tronconique divergente en direction de l'extrémité terminale de l'outil de remplissage, ladite première zone (9) tronconique de l'outil (7, 8) de remplissage étant raccordée à la second zone (10) en formant un angle compris entre 70 et 130 degrés et de préférence entre 80 et 100 degrés.

7. Outil de remplissage selon la revendication 6 **caractérisé en ce qu'**il comprend une première pièce (7) formant l'extrémité de l'outil de remplissage destiné à venir se loger au moins partiellement dans la cavité lors de l'étape de réalisation d'une étanchéité entre l'outil de remplissage et l'extrémité de raccordement, l'outil comprenant une seconde pièce (8) comprenant un organe d'accrochage mécanique amovible sur l'extrémité de raccordement, notamment un taraudage.

8. Outil de remplissage selon la revendication 7 **caractérisé en ce que** les première et seconde pièces de l'outil de remplissage sont des entités physiques liées ou distinctes, lors de l'étape de réalisation d'une étanchéité entre l'outil de remplissage et l'extrémité de raccordement, la seconde pièce est accrochée mécaniquement sur l'extrémité de raccordement et enserre la première pièce sur cette extrémité de raccordement.

9. Outil selon la revendication 7 ou 8 **caractérisé en ce que** la première pièce comporte une butée serrée entre l'extrémité de raccordement et une paroi de la seconde pièce.

10. Outil selon l'une quelconque des revendications 7 à 9 **caractérisé en ce que** la première pièce a la forme générale d'un raccord tubulaire.

11. Outil selon l'une quelconque des revendications 7 à 10 **caractérisé en ce que** la seconde pièce a la forme générale d'un écrou comprenant un taraudage destiné à coopérer avec un filetage formé sur l'extrémité de raccordement.

12. Outil selon l'une quelconque des revendications 7 à 11 **caractérisé en ce que** ladite première zone tronconique de l'outil de remplissage comprend une gorge annulaire dans laquelle est logé un joint d'étanchéité torique.

## Patentansprüche

1. Verfahren zum Füllen einer Lagervorrichtung eines druckbeaufschlagten Fluids, die eine Flasche oder eine Gesamtheit von Flaschen umfasst, die mindestens einen Hahn umfasst, wobei der Hahn einen Füllstutzen umfasst, der einen Körper (1) umfasst, in dem ein innerer Kreislauf (3) für druckbeaufschlagtes Fluid untergebracht ist, wobei ein erstes Ende (4) des Kreislaufs (3) in den Körper (1) auf Höhe eines Anschlussendes (2) des Körpers (1) mündet, wobei das Anschlussende (2) eine Aushöhlung (5) umfasst, wobei das erste Ende (4) des Kreislaufs (3) in den Boden der Aushöhlung (5) mündet, wobei der Rand, der das erste Ende (4) des Kreislaufs (3) begrenzt, eine umlaufende Kante (6) aufweist, die in Bezug auf den Boden der Aushöhlung (5) vorspringt, wobei sich die Kante (6) am Boden der Aushöhlung befindet und das erste Ende (4) des Kreislaufs (3) begrenzt, das heißt die Eingangsöffnung des Kreislaufs (3) begrenzt, die in den Körper (1) mündet, wobei die Aushöhlung (5) einen kegelstumpfförmigen Abschnitt umfasst, der zum ersten Ende (4) des Kreislaufs (3) hin zusammenläuft, wobei sich die Kante (6) auf Höhe des zusammenlaufenden Endes des kegelstumpfförmigen Abschnitts befindet, wobei die Kante (6) in den Boden der Aushöhlung (5) in Bezug auf das zusammenlaufende Ende des kegelstumpfförmigen Abschnitts vorspringt, wobei das Füllen über ein Füllwerkzeug (7, 8) erfolgt, das auf dichte Art an das Anschlussende (2) angeschlossen wird, wobei das Verfahren einen Schritt des Herstellens einer Dichtheit zwischen dem Füllwerkzeug (7, 8) und dem Anschlussende (2) in und/oder an dem Eingang der Aushöhlung (5) umfasst, dann einen Schritt des Beförderns von Fluid in die Lagervorrichtung mittels des Füllwerkzeugs (7, 8) über das Anschlussende (2) und den Kreislauf (3), wobei der Übergang zwischen der Kante (6) und dem zusammenlaufenden Ende des kegelstumpfförmigen Abschnitts eine Rille bildet, die das erste Ende (4) des Kreislaufs (3) umgibt, wobei das auseinanderlaufende Ende des kegelstumpfförmigen Abschnitts der Aushöhlung an einen zylindrischen Abschnitt angeschlossen ist, der den Rand des Eingangs der Aushöhlung (5) begrenzt, wobei beim Schritt des Herstellens einer Dichtheit zwischen dem Füllwerkzeug (7, 8) und dem Anschlussende (2) das Füllwerkzeug einen Bereich umfasst, der in dichten Kontakt tritt mit mindestens einem aus: dem kegelstumpfförmigen Abschnitt, der Kante (6), dem zylindrischen Abschnitt, dem Eingang der Aushöhlung (5), **dadurch gekennzeichnet, dass** das Ende des Füllwerkzeugs (7, 8), das sich beim Schritt des Herstellens einer Dichtheit zwischen dem Füllwerkzeug (7, 8) und dem Anschlussende (2) mindestens teilweise in die Aushöhlung (5) einfügt, einen kegelstumpfförmigen ersten Bereich (9) umfasst, der von dem kegelstumpfförmigen Abschnitt der Aushöhlung (5) abgewandelt ist, wobei der kegelstumpfförmige erste Bereich (9) des Füllwerkzeugs (7, 8) an einen zweiten Bereich (10) angeschlossen ist, der komplementär zu der Kante (6) ist, und dadurch, dass beim Schritt des Herstellens einer Dichtheit zwischen dem Füllwerkzeug (7, 8) und dem Anschlussende (2) der kegelstumpfförmige erste Bereich (9) des Füllwerkzeugs (7, 8) auf den kegelstumpfförmigen Abschnitt der Aushöhlung (5) drückt und der zweite Bereich (10) des Füllwerkzeugs (7, 8) auf die Kante (6) drückt.

2. Verfahren zum Füllen nach Anspruch 1, **dadurch gekennzeichnet, dass** das Füllwerkzeug (7, 8) ein Ende umfasst, das sich beim Schritt des Herstellens einer Dichtheit zwischen dem Füllwerkzeug (7, 8) und dem Anschlussende (2) mindestens teilweise in die Aushöhlung (5) einfügt.

3. Verfahren zum Füllen nach Anspruch 1 oder 2, **dadurch gekennzeichnet, dass** der kegelstumpfförmige erste Bereich (9) des Füllwerkzeugs (7,8) eine Dichtung (11) umfasst, die auf den kegelstumpfförmigen Abschnitt der Aushöhlung (5) drückt.

4. Verfahren nach einem der Ansprüche 1 bis 3, **dadurch gekennzeichnet, dass** das erste Ende (4) des Kreislaufs eine runde Öffnung auf dem Anschlussende (2) bildet, und dadurch, dass die Kante (6) eine runde Form aufweist.

5. Verfahren nach einem der Ansprüche 1 bis 4, **dadurch gekennzeichnet, dass** das Anschlussende (2) auf seiner Peripherie ein Gewinde umfasst, das konzentrisch rund um die Aushöhlung (5) und um das erste Ende (4) des Kreislaufs (3) gebildet ist.

6. Füllwerkzeug für einen Hahn, der einen Füllstutzen umfasst, der einen Körper (1) umfasst, in dem ein innerer Kreislauf (3) für druckbeaufschlagtes Fluid untergebracht ist, wobei ein erstes Ende (4) des Kreislaufs (3) in den Körper (1) auf Höhe eines Anschlussendes (2) des Körpers (1) mündet, wobei das Anschlussende (2) eine Aushöhlung (5) umfasst, wobei das erste Ende (4) des Kreislaufs (3) in den Boden der Aushöhlung (5) mündet, wobei der Rand, der das erste Ende (4) des Kreislaufs (3) begrenzt, eine umlaufende Kante (6) aufweist, die in Bezug auf den Boden der Aushöhlung (5) vorspringt, wobei sich die Kante (6) am Boden der Aushöhlung befindet und das erste Ende (4) des Kreislaufs (3) begrenzt, das heißt die Eingangsöffnung des Kreislaufs (3) begrenzt, die in den Körper (1) mündet, wobei die Aushöhlung (5) einen kegelstumpfförmigen Abschnitt umfasst, der zum ersten Ende (4) des Kreislaufs (3) hin zusammenläuft, wobei sich die Kante (6) auf Höhe des zusammenlaufenden Endes des kegelstumpfförmigen Abschnitts befindet, wobei die Kante (6) in den Boden der Aushöhlung (5) in Bezug auf das zusammenlaufende Ende des kegelstumpfförmigen Abschnitts vorspringt, **dadurch gekennzeichnet, dass** das Werkzeug (7, 8) einen Körper umfasst, in dem ein innerer Kanal (12) zum Befördern von Fluid untergebracht ist, wobei das Werkzeug ein Ende umfasst, das dazu bestimmt ist, auf dichte Art an den Füllstutzen eines Hahns angeschlossen zu werden, wobei das Ende des Füllwerkzeugs einen kegelstumpfförmigen ersten Bereich (9) umfasst, der zu seinem abschließenden Ende hin zusammenläuft, wobei das zusammenlaufende Ende des kegelstumpfförmigen ersten Bereichs (9) des Füllwerkzeugs (7, 8) eine Eingangsöffnung des inneren Kanals (12) begrenzt, wobei die Eingangsöffnung des Kanals (12) eine Fase umfasst, die einen kegelstumpfförmigen zweiten Bereich (10) bildet, der in Richtung des abschließenden Endes des Füllwerkzeugs auseinanderläuft, wobei der kegelstumpfförmige erste Bereich (9) des Füllwerkzeugs (7, 8) an den zweiten Bereich (10) unter Bildung eines Winkels, der zwischen 70 und 130 Grad und vorzugsweise zwischen 80 und 100 Grad beträgt, angeschlossen ist.

7. Füllwerkzeug nach Anspruch 6, **dadurch gekennzeichnet, dass** es ein erstes Teil (7) umfasst, das das Ende des Füllwerkzeugs bildet, das dazu bestimmt ist, sich beim Schritt des Herstellens einer Dichtheit zwischen dem Füllwerkzeug und dem Anschlussende mindestens teilweise in die Aushöhlung einzufügen, wobei das Werkzeug ein zweites Teil (8) umfasst, das ein Element zur trennbaren mechanischen Befestigung am Anschlussende, insbesondere ein Innengewinde, umfasst.

8. Füllwerkzeug nach Anspruch 7, **dadurch gekennzeichnet, dass** das erste und zweite Teil des Füllwerkzeugs verbundene oder separate physikalische Einheiten sind, wobei, beim Schritt des Herstellens einer Dichtheit zwischen dem Füllwerkzeug und dem Anschlussende, das zweite Teil mechanisch am Anschlussende befestigt wird und das erste Teil auf diesem Anschlussende umschließt.

9. Werkzeug nach Anspruch 7 oder 8, **dadurch gekennzeichnet, dass** das erste Teil einen Anschlag umfasst, der zwischen dem Anschlussende und einer Wand des zweiten Teils eingeklemmt ist.

10. Werkzeug nach einem der Ansprüche 7 bis 9, **dadurch gekennzeichnet, dass** das erste Teil die allgemeine Form eines Rohrstutzens aufweist.

11. Werkzeug nach einem der Ansprüche 7 bis 10, **dadurch gekennzeichnet, dass** das zweite Teil die allgemeine Form einer Mutter aufweist, die ein Innengewinde umfasst, das dazu bestimmt ist, mit einem Gewinde zusammenzuwirken, das auf dem Anschlussende gebildet ist.

12. Werkzeug nach einem der Ansprüche 7 bis 11, **dadurch gekennzeichnet, dass** der kegelstumpfförmige erste Bereich des Füllwerkzeugs eine ringförmige Rille umfasst, in die ein O-Ring eingefügt ist.

## Claims

1. Method for filling a storage device, with fluid under pressure comprising a bottle or set of bottles comprising at least one valve, the valve comprising a filling connection comprising a body (1) housing an internal circuit (3) for fluid under pressure, with a first end (4) of the circuit (3) opening onto the body (1) on a connection end (2) of the body (1), the connection end (2) comprising a cavity (5), the first end (4) of the circuit (3) opening at the bottom of said cavity (5), with the edge delimiting the first end (4) of the circuit (3) comprising a peripheral edge (6) protruding with respect to the bottom of the cavity (5), with the edge (6) being located at the bottom of the cavity and delimiting the first end (4) of the circuit (3), i.e. delimits the inlet orifice of the circuit (3) which opens onto the body (1), with the cavity (5) comprising a tapered portion converging towards the first end (4) of the circuit (3), with the edge (6) being located on the converging end of the tapered portion, with the edge (6) protruding in the bottom of the cavity (5) with respect to the converging end of the tapered portion, with the filling being carried out via a filling tool (7, 8) that is connected in a sealed manner to the connection end (2), the method comprising a step of creating a seal between the filling tool (7, 8) and the connection end (2) in and/or at the inlet of the cavity (5) then a step of transferring fluid into the storage device by the filling tool (7, 8) via the connection end (2) and the circuit (3), with the junction between the edge (6) and the converging end of the tapered portion forming a gorge surrounding the first end (4) of the circuit (3), with the diverging end of the tapered portion of the cavity being connected to a cylindrical portion delimiting the edge of the inlet of the cavity (5), during the step of creating a seal between the filling tool (7, 8) and the connection end (2), with the filling tool comprising a zone coming into sealed contact with at least one among: the tapered portion, the edge (6), the cylindrical portion, the inlet cavity (5), **characterised in that** the end of the filling tool (7, 8) is housed at least partially in the cavity (5) during the step of creating a seal between the filling tool (7, 8) and the connection end (2) comprises a first conjugated tapered zone (9) of the tapered portion of the cavity (5), said first tapered first zone (9) of the filling tool (7, 8) being connected to a second complementary zone (10) of the edge (6), and **in that** during the step of creating a seal between the filling tool (7, 8) and the connection end (2), said first tapered first zone (9) of the filling tool (7, 8) bears against the tapered portion of the cavity (5) and the second zone (10) of the filling tool (7, 8) bears against the edge (6).

2. Method for filling according to claim 1, **characterised in that** the filling tool (7, 8) comprises an end housed at least partially in the cavity (5) during the step of creating a seal between the filling tool (7, 8) and the connection end (2).

3. Method for filling according to claim 1 or 2, **characterised in that** said first tapered first zone (9) of the filling tool (7, 8) comprises a seal (11) bearing against the tapered portion of the cavity (5).

4. Method according to any of claims 1 to 3 **characterised in that** the first end (4) of the circuit forms a circular orifice on the connection end (2) and **in that** the edge (6) has a circular shape.

5. Method according to any of claims 1 to 4 **characterised in that** the connection end (2) comprises on its periphery a threading formed concentrically around the cavity (5) and the first end (4) of the circuit (3).

6. Tool for filling a valve comprising a filling connection comprising a body (1) housing an internal circuit (3) for fluid under pressure, a first end (4) of the circuit (3) opening onto the body (1) on a connection end (2) of the body (1), the connection end (2) comprising a cavity (5), the first end (4) of the circuit (3) opening at the bottom of said cavity (5), with the edge delimiting the first end (4) of the circuit (3) comprising a peripheral edge (6) protruding with respect to the bottom of the cavity (5), with the edge (6) being located at the bottom of the cavity and delimiting the first end (4) of the circuit (3), i.e. delimits the inlet orifice of the circuit (3) which opens onto the body (1), with the cavity (5) comprising a tapered portion converging towards the first end (4) of the circuit (3), with the edge (6) being located on the converging end of the tapered portion, with the edge (6) protruding in the bottom of the cavity (5) with respect to the converging end of the tapered portion, **characterised in that** the tool (7, 8) comprises a body housing an internal channel (12) for transferring fluid, with the tool comprising an end intended to be connected in a sealed manner to said filling connection of a valve, said end of the filling tool comprising a first tapered zone (9) converging towards its terminal end, said converging end of the first tapered zone (9) of the filling tool (7, 8) delimiting an inlet opening of the internal channel (12), with the inlet opening of the channel (12) comprising a chamfer forming a second tapered zone (10) diverging in the direction of the terminal end of the filling tool, said first tapered first zone (9) of the filling tool (7,8) being connected to the second zone (10) by forming an angle between 70 and 130 degrees and preferably between 80 and 100 degrees.

7. Tool for filling according to claim 6 **characterised in that** it comprises a first part (7) forming the end of the filling tool intended to be housed at least partially in the cavity during the step of creating a seal between the filling tool and the connection end, with the tool comprising a second part (8) comprising a removable mechanical attaching member on the connection end, especially a tapping.

8. Tool for filling according to claim 7 **characterised in that** the first and second parts of the filling tool are connected or separate physical entities, during the step of creating a seal between the filling tool and the connection end, the second part is mechanically attached onto the connection end and clamps the first part onto this connecting end.

9. Tool according to claim 7 or 8 **characterised in that** the first part comprises a clamped stop between the connection end and a wall of the second part.

10. Tool according to any of claims 7 to 9 **characterised in that** the first part has the general shape of a tubular connector.

11. Tool according to any of claims 7 to 10 **characterised in that** the second part has the general shape of a nut comprising a tapping intended to cooperate with a threading formed on the connection end.

12. Tool according to any of claims 7 to 11 **characterised in that** said first tapered zone of the filling tool comprises an annular groove in which is housed an O-ring seal.
